(19) Europäisches Patentamt
European Patent Office
Office européen des brevets

(11) **EP 2 452 240 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(21) Anmeldenummer: **10721485.0**

(22) Anmeldetag: **21.05.2010**

(51) Int Cl.:
***G05D 1/02*** *(2006.01)*

(86) Internationale Anmeldenummer:
**PCT/EP2010/057025**

(87) Internationale Veröffentlichungsnummer:
**WO 2011/003667 (13.01.2011 Gazette 2011/02)**

(54) **SELBSTSTEUERNDES FAHRZEUG**

SELF-CONTROLLING VEHICLE

VÉHICULE À PILOTAGE AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.07.2009 DE 102009027602**

(43) Veröffentlichungstag der Anmeldung:
**16.05.2012 Patentblatt 2012/20**

(73) Patentinhaber: **Robert Bosch GmbH**
**70442 Stuttgart (DE)**

(72) Erfinder:
• **BIBER, Peter**
**72070 Tübingen (DE)**
• **ALBERT, Amos**
**71229 Leonberg (DE)**

(56) Entgegenhaltungen:
EP-A1- 1 557 730    DE-A1-102004 013 811
US-A1- 2003 208 304    US-A1- 2005 046 373
US-B1- 6 671 592

EP 2 452 240 B1

**Beschreibung**

Stand der Technik

Die vorliegende Erfindung betrifft ein selbststeuerndes Fahrzeug nach dem Oberbegriff des Hauptanspruchs.

Ein typischer Vertreter eines derartigen selbststeuernden Fahrzeuges ist ein sogenannter autonomer Rasenmäher (ARM), wie er für verschiedenste Zwecke, insbesondere jedoch für den Privatbereich, bekannt ist. Eine derartige, selbststeuernde Vorrichtung arbeitet üblicherweise nach dem Prinzip der Zufallsnavigation: Dabei fährt der ARM üblicherweise geradeaus, bis er an eine (geeignet durch Sensorik bzw. einen Einfassungsdraht erfasste) Grenze trifft und wendet dann in einem zufällig bestimmten Winkel. Eine derartige Vorgehensweise ist steuerungstechnisch einfach und insbesondere ohne Kartierung (Kartendaten) der zu bearbeitenden Fläche (Arbeitsbereich) realisiert, allerdings weist diese bekannte Vorgehensweise in der Praxis den Nachteil auf, dass eine vollständige (Flächen-)Abdeckung entsprechend der jeweils winkelbestimmt gefahrenen Richtungen zufallsabhängig ist, so dass eine vollständige Abdeckung nicht garantiert ist bzw. nur nach sehr vielen Streckenbewegungen erfolgt. Dies führt dann wieder zu nachteiliger Redundanz in Form von Mehrfachüberfahrungen.

Aus dem Stand der Technik ist es ferner bekannt, ein selbststeuerndes Fahrzeug, etwa einen autonomen Rasenmäher, den Arbeitsbereich auf der Basis vorhandener Kartendaten abfahren zu lassen. Bedingung hierfür ist jedoch üblicherweise ein (entsprechend der Kartierung bzw. einer Bewegungsauflösung) genaues Navigationssystem, welches, etwa in Form üblicher GPS-Technologien, entweder sehr hohen Aufwand verursacht (und sich damit insbesondere für einen kostensensitiven privaten Bereich wenig geeignet), oder aber keine zur Bearbeitung insbesondere kleinerer Flächen ausreichende Positionsauflösung ermöglicht.

Aus dem Stand der Technik ist es ferner bekannt, den Arbeitsbereich mittels eines (stromdurchflossenen) Einfassungsdrahts zu begrenzen. Dem ARM zugeordnete Magnetfeldsensoren sind dann in der Lage, durch Detektion des (z.B. auf den Einfassungsdraht aufmodulierten) Einfassungsdrahtsignals zu erkennen, ob sich der ARM innerhalb oder außerhalb der vom Draht bestimmten Grenze befindet.

Eine besondere Herausforderung besteht jedoch darin, nicht nur den Einfassungsdraht als solchen zu erkennen, sondern auch eine aktuelle Position des Fahrzeugs (ARM) entlang dieses (typischerweise geschlossenen, da einen Arbeitsbereich vollständig umschließenden) Einfassungsdrahts: Eine derartige Vorgehensweise, welche ohne genaues Positions- bzw. Ortungssystem das Erreichen eines Ausgangspunkts beim Abfahren einer Begrenzungskontur feststellt, ist aus der WO 03/039314 bekannt. Dieser Stand der Technik speichert während des Abfahrens in regelmäßigem Abstand Daten über den abgefahrenen Pfad, wobei jeweils aktuelle Daten mit gespeicherten Informationen verglichen werden, um festzustellen, ob gleiche Daten vorhanden sind. Allerdings basiert die Erkennung auf dem Vergleich eines aktuellen Blocks konstanter Länge (L) mit einem gespeicherten Block derselben Länge; das aus dem Stand der Technik bekannte Verfahren geht daher davon aus, dass die Charakteristik eines Blocks dieser Länge ausreichend ist, um den Block eindeutig innerhalb der gesamten Kontur zu identifizieren.

In der Praxis ist dies jedoch problematisch, denn insbesondere einfache Konturen, wie z.B. eine rechteckige Rasenfläche, weisen bereits auf das offensichtliche Problem hin, dass der Block der Länge (L) mehrfach auftreten wird. Da zudem weitere Daten und Randbedingungen, die derartige Mehrdeutigkeiten verhindern könnten, bei einfachen Flächen oft nicht vorhanden sind, ist diese Vorgehensweise potenziell problembehaftet und verbesserungsbedürftig, nicht zuletzt als auf die bekannte Weise erstellte Karten ansonsten kritische Fehler aufweisen können.

Aus der US 2005/046373 A1 ist ein selbststeuerndes Fahrzeug bekannt, das zum autonomen Fortbewegen auf einer Fläche ausgebildet ist und Antriebsmittel zur Fortbewegung sowie Navigationsmittel aufweist. Die Navigationsmittel sind zur Positionsbestimmung entlang eines geschlossenen, einen Arbeitsbereich der Fläche umschließenden Pfades ausgebildet, wobei die Navigationsmittel zum Erzeugen von aufeinander folgenden Pfadabschnittsdaten ausgebildet sind und die Pfadabschnittsdaten für Steckenabschnitte des Pfades jeweils eines zugeordnete Orientierungsinformation, insbesondere Winkelinformation, aufweisen. Den Navigationsmitteln sind Mittel zugeordnet, die aus einer einer Fortbewegung entlang des Pfades entsprechenden Folge von Pfadabschnittsdaten feststellen, ob das Fahrzeug den umschließenden Pfad vollständig abgefahren hat.

Offenbarung der Erfindung

Aufgabe der vorliegenden Erfindung ist es daher, ein selbstgesteuertes Fahrzeug nach dem Oberbegriff des Hauptanspruchs zu schaffen, welches verbesserte Navigationsmittel dahingehend aufweist, dass eine zuverlässig Bestimmung der Kontur des Arbeitsbereichs und mithin ein zuverlässiges Feststellen erfolgen kann, dass der den Arbeitsbereich umschließende Pfad vollständig abgefahren wurde.

Die Aufgabe wird durch das Fahrzeug mit den Merkmalen des Hauptanspruchs gelöst. Vorteilhafte Weiterbildungen der Erfindung sind in den Unteransprüchen beschrieben.

Als zur Erfindung gehörig beansprucht ist zudem ein Betriebsverfahren für ein selbststeuerndes Fahrzeug mit mindestens zwei Verfahrensmerkmalen, wie sie aus der vorliegenden Gesamtoffenbarung erkennbar sind.

In erfindungsgemäß vorteilhafter Weise bearbeiten die Navigationsmittel Pfadabschnittsdaten mit jeweils einer zugeordneten Orientierungsinformation. Den Navigationsmitteln erfindungsgemäß zugeordnete Autokorrelationsmittel sind dann in der Lage, Folgen von Pfadabschnittsdaten (mit jenen zugeordneten Orientierungsinformationen) zu analysieren, eine Autokorrelation (durch Erstellung von Autokorrelationsdaten) festzustellen und daraus dann eine Feststellung zu treffen, ob das Fahrzeug den umschließenden Pfad vollständig abgefahren hat (bzw. eine bereits abgefahrene Folge von Streckenabschnitten erneut abgefahren wird).

Besonders bevorzugt im Rahmen der Erfindung ist es, das selbststeuernde Fahrzeug als autonomen Rasenmäher (ARM), insbesondere für den Privatbereich, auszubilden, wobei auch andere, vergleichbare Einsatzzwecke günstig sind. So könnte sich als weiterbildungsgemäß auf dem Fahrzeug vorzusehende Arbeits- bzw. Funktionseinrichtung nicht nur eine Mähvorrichtung, sondern eine Saugvorrichtung (etwa in der Art eines Staubsaugers), eine Kehrvorrichtung (etwa in der Art einer Fege- und/oder Bürstvorrichtung für Büro- oder Wohnraumflächen), eine Düngevorrichtung und/oder eine Bewässerungsvorrichtung sowie vergleichbare Anwendungen anbieten.

Weiterbildungsgemäß ist den Navigationsmitteln eine Kartierungseinheit zugeordnet, die zum Erzeugen von Umrisskartendaten als Reaktion auf die Streckenabschnittsdaten und/oder die Autokorrelationsdaten ausgebildet ist; insbesondere das erfolgreiche Abfahren eines gesamten, den Arbeitsbereich umschließenden Pfades ermöglicht gemäß dieser Weiterbildung das Erzeugen einer (Umriss) Karte, welche dann für nachfolgenden Einsatz nützlich ist. So ist es damit weiterbildungsgemäß im Rahmen der Erfindung möglich, dass, etwa im Fall eines Orientierungsverlusts des Fahrzeugs im (z.B. Mäh-) Betrieb, durch einfaches Anfahren eines Einfassungsdrahts od.dgl. Signalgebers für eine Arbeitsbereichsgrenze eine Neuorientierung und damit eine effiziente Weiterführung des Betriebs erfolgen kann.

Erfindungsgemäß vorteilhaft und gemäß einer bevorzugten Weiterbildung ist vorgesehen, dass die Streckenabschnitte (und entsprechende gespeicherte Daten) eine konstante Länge (entlang des Pfades) aufweisen; dies erleichtert die Datenverarbeitung durch die Autokorrelationsmittel, darüber hinaus wird der erforderliche Speicheraufwand reduziert.

Diese Wirkung hat, wie oben dargelegt, insbesondere auch das Zuordnen der Winkelinformation als Orientierungsinformation für die Pfadabschnittsdaten; zusätzlich kommt der Vorteil, dass ein Speicherbedarf für eine Folge von Pfadabschnittsdaten (lediglich) proportional zur Pfadlänge wächst, insoweit der Speicheraufwand reduziert ist.

Besonders bevorzugt erfolgt im Rahmen einer bevorzugten Ausführungsform (best mode) eine Messung bzw. Bestimmung der Streckenabschnitte durch Odometrie. Bei diesem ansonsten bekannten Vorgehen wird ein zurückgelegter Weg zweier (etwa links und rechts angeordneter) Räder gemessen, wobei sich aus diesen Informationen ein gefahrener Pfad {etwa durch Integration der entsprechenden Wegstrecken) rekonstruieren lässt. Zusätzlich kommt im Rahmen der Erfindung und mittels der Winkelinformation das Messen einer (absoluten) Ausrichtung des Fahrzeugs. Diese jedem Satz der Pfadabschnittsdaten zugeordnete Information minimiert vorteilhaft einen Messfehler bei längeren Strecken, da der (Kompass-) Messfehler im Gegensatz zu den Odometriedaten, unabhängig von einer bereits gefahrenen Strecke ist. Eine Fusion dieser beiden Informationen, etwa durch einen Kalman-Filter, erlaubt dann eine günstige Schätzung von Position und Ausrichtung, bei der der Fehler in der Ausrichtung beschränkt bleibt und in der Position nur langsam wächst. Entsprechend ist der relative Fehler zwischen zwei Positionen auf dem Pfad ebenfalls abhängig von der Entfernung dieser Positionen entlang des Pfades und für eine bevorzugt angenommene, konstante Entfernung.

Gemäß einer weiteren bevorzugten Ausführungsform der Erfindung ist der elektronischen Speichereinheit eine Einheit zur Datenkompression zugeordnet, welche etwa mittels einer zentralen Steuereinheit od.dgl. Prozessor- bzw. Controllereinheit realisierbar ist. Diese ermöglicht vorteilhaft und in einer Weiterbildung, dass bei großer, die Speicherkapazität der Speichereinheit übersteigender Datenmenge eine Reduktion der zu speichernden Pfadabschnittsdaten erfolgt, weiter bevorzugt etwa durch Mittelung aufeinanderfolgender Pfadabschnittsdaten (z.B. durch Bildung eines Richtungs-Mittelwerts) und Ersatz dieses Datenpaares durch ein Datum.

Während es gemäß der Erfindung vorteilhaft ist, den Arbeitsbereich (in ansonsten bekannter Weise) durch einen Einfassungsdraht zu begrenzen, welcher dann wiederum mit geeigneter Sensorik mit dem Fahrzeug zusammenwirkt, ist die vorliegende Erfindung hierauf nicht beschränkt. Hierbei ist es von der Erfindung umfasst, auch andere Mittel, optische oder magnetisch wirksame, Sensormittel vorzusehen, welche in der Lage sind, den Arbeitsbereich sowie dessen Begrenzung zu erkennen, so dass insoweit in der erfindungsgemäß vorgesehenen Weise der den Arbeitsbereich umschließende Pfad abgefahren werden kann.

Im Ergebnis ermöglicht es die Erfindung in überraschend einfacher und eleganter Weise, ein selbststeuerndes (= autonomes) Fahrzeug zu schaffen, welches mit geringem Aufwand und zuverlässig das Abfahren des Pfades um einen Arbeitsbereich herum ermöglicht und unter Minimierung von Fehlerkennung bereits gefahrene Streckenabschnitte bzw. das vollständige Abfahren des Pfades erkennen kann.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

Fig. 1:  ein schematisches Blockschaltbild des selbststeuernden (autonomen) Fahrzeugs gemäß einem ersten Ausführungsbeispiel der Erfindung mit hierfür vorgesehenen Funktionskomponenten;

Fig. 2:  eine schematische Darstellung zur Verdeutlichung eines Arbeitsbereichs einer Fläche, welcher von einem Einfassungsdraht umgeben ist;

Fig. 3:  eine schematische Darstellung zur Verdeutlichung von Streckenabschnitten sowie zugehörigen Pfadabschnittsdaten; in regelmäßigen Abständen d (gemessen durch Odometrie) werden die jeweiligen Orien-tierungen (Richtungswinkel) $\varphi_i$ gespeichert; und

Fig. 4:  eine Verdeutlichung der Notwendigkeit, zur Vermeidung von Fehlerfassungen und entsprechenden Rückschlüssen durch die Navigationseinheit keine Korrelation anhand von einer festen Anzahl von Streckenabschnitten durchzuführen.

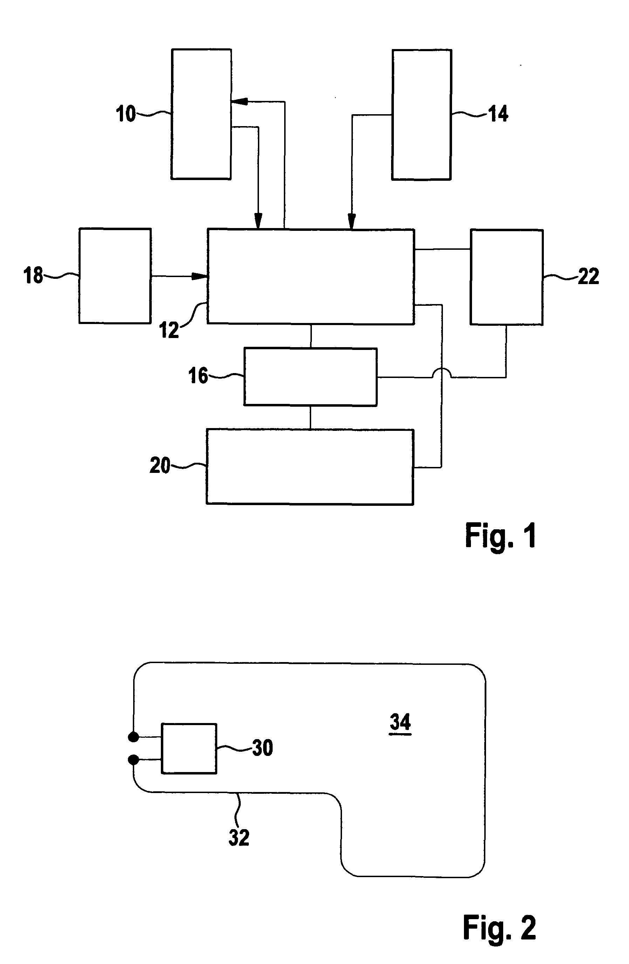

Die Fig. 1 verdeutlicht schematisch die Funktionskomponenten zur Realisierung eines autonomen Rasenmähers als Ausführungsbeispiel für ein selbststeuerndes Fahrzeug. Auf einem (nicht konkret gezeigten) Fahrgestell bzw. einer Plattform ist zunächst eine Arbeits- bzw. Funktionseinheit 20 in Form eines Mähwerks vorgesehen. Dieses wird angesteuert (insbesondere aktiviert und deaktiviert) von einer zentralen Steuereinheit 12, welche, etwa realisiert durch einen geeignet programmierten Mikrocontroller, verschiedene Funktionalitäten der in Fig. 1 gezeigten Vorrichtung steuert und koordiniert.

Mit der zentralen Steuereinheit 12 wirkt zusammen eine Antriebseinheit 10, welche, verdeutlicht durch den Doppelpfeil, nicht nur in ansonsten bekannter Art, etwa durch ein Paar von motorisch angetriebenen Antriebsrädern, einen Geradeaus- sowie Kurvenpfad der Rasenmähereinheit ermöglicht, sondern zudem mit einer (ansonsten) bekannten Odometrieeinheit versehen ist, welche der zentralen Steuereinheit 10 in geeigneter Weise Odometriedaten zur Verfügung stellt. Zusätzlich mit der zentralen Steuereinheit verbunden ist eine Kompasseinheit 14, welche, geeignet für aufeinanderfolgend zu generierende Pfadabschnittsdaten, eine (geeignet digitalisierte) Richtungsinformation, z.B. als Kompasswert, zur Verfügung stellt.

Die zentrale Steuereinheit 12 arbeitet ferner zusammen mit einer Einfassungsdraht-Sensoreinheit 18, welche, etwa mittels einer ansonsten bekannten Magnetfeldsensorik, erkennt, dass sich das Fahrzeug an einem einen Arbeitsbereich 34 (Fig. 2) umschließenden Einfassungsdraht 32 befindet (bzw. eine Information über eine Position relativ zu diesem Draht ausgeben kann). In ansonsten bekannter Weise wird dieser Einfassungsdraht 32 durch eine schematisch gezeigte Signalgeneratoreinheit 30 mit einem entsprechend von der Einheit 18 detektierbaren Signal versehen.

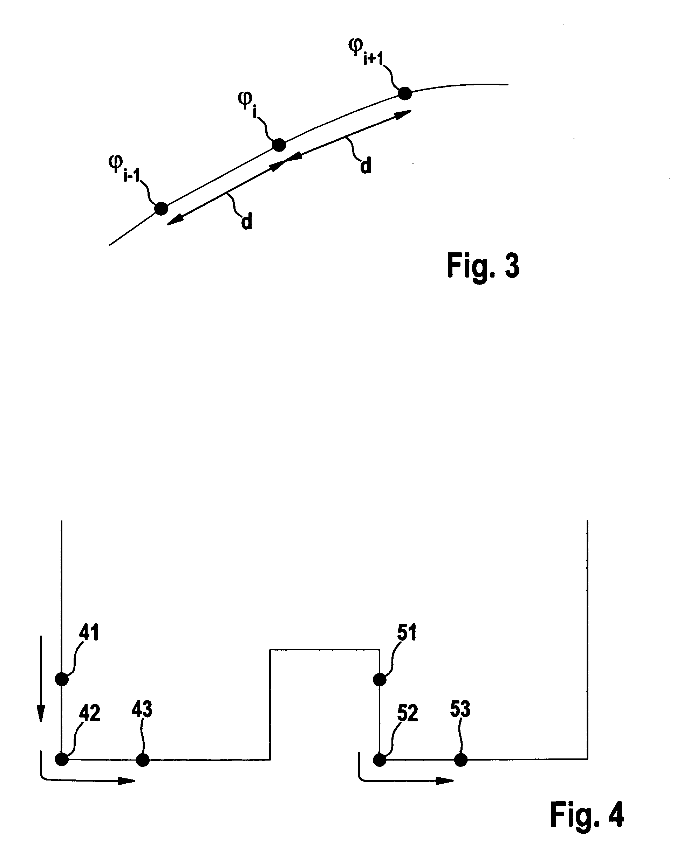

Wesentliche Funktionalität der zentralen Steuereinheit 12 ist es, aus einer Folge von Pfadabschnittsdaten, welche im gezeigten Ausführungsbeispiel für jeden Streckenabschnitt einer konstanten Länge d (vgl. Fig. 3) einen Richtungswinkel $\varphi$ aufweisen, eine Autokorrelation derart zu berechnen und entsprechende Korrelationsdaten zu erzeugen, dass aus diesen festgestellt werden kann, ob eine Folge von Streckenabschnitten des Pfades 32 (in Fig. 2) bereits abgefahren wurde:

Zur weiteren Erläuterung dieser erfindungsgemäß implementierten Autokorrelation wird von dem generellen Ansatz ausgegangen, dass zwei Folgen von Daten als korreliert anzunehmen sind, wenn die Beziehung zwischen den Gliedern (Elementen) der Folge nicht zufällig ist. Eine Folge ist autokorreliert, wenn es einen Versatz (Offset) t gibt, so dass die Folge mit derselben, aber um t verschobenen Folge korreliert.

Für die weitere Diskussion des Ausführungsbeispiels sei angenommen, dass der Pfad in festen Abständen d aufgeteilt ist und durch n Ausrichtungen repräsentiert ist. Dabei ist $\varphi_i$ (i = O..n-1) die i-te Ausrichtung, gewonnen aus der Kompasseinheit 14. Damit gilt $\gamma(\tau) = \dfrac{1}{n-\tau} \sum_{i=\tau}^{n} (\varphi_i - \varphi_{i-\tau})^2$ als Maß für die Autokorrelation, wobei die Differenz zweier Orientierungen kanonisch durch den kleinsten Winkelabstand definiert ist. Mit dieser Definition ist die Folge umso mehr autokorreliert, je kleiner der Wert $\gamma(\tau)$ ist. Sollte die Folge $\gamma$ periodisch mit der Periode $\tau$ sein (was dem Erreichen eines Ausgangspunktes beim Abfahren des Pfades, Fig. 2, entspricht, so lässt sich unter den gegebenen Voraussetzungen eine Aussage über die Größenordnung von $\gamma(\tau)$ machen: Sei die Kompassmessung $\varphi_i$ unabhängig von i mit einem Messfehler der Varianz $\sigma^2$ behaftet. Dann ergibt sich aus grundlegenden wahrscheinlichkeitstheoretischen Betrachtungen eine Varianz von $2\sigma^2$ für die Terme $(\varphi_i - \varphi_{i-\tau})$ und eine Varianz von Erstellung einer Umrisskante für einen autonomen Roboter $\dfrac{2}{n-\tau}\sigma^2$, bzw. eine Standardabweichung von $\sqrt{\dfrac{2}{n-\tau}}\sigma$. Eine mögliche Periode

ist also in einer Stelle $\tau$, wenn der Wert von $\gamma(\tau)$ ein gewisses Mehrfaches der berechneten Standardabweichung nicht überschreitet. Z.B. ist unter den gegebenen Annahmen nur eine von einer Million Messung von $\gamma(\tau)$ größer als sechs Standardabweichungen.

Eine weitere Bedingung erleichtert das Auffinden von Perioden in der gegebenen Anwendung. Hat die autonome Plattform einmal komplett die Kontur abgefahren, so hat sie sich insgesamt um $2\pi$ oder $-2\pi$ gedreht, je nachdem, ob die Kontur im Uhrzeigersinn oder im Gegenuhrzeigersinn abgefahren wurde. Bei der Berechnung von $\gamma(\tau)$ sollten nun also erstens die Winkel $\varphi_1$ nicht normalisiert werden, d.h. eine Ausrichtung von 0° unterscheidet sich von einer Ausrichtung von 360° darin, dass sich die Plattform gegenüber der Startausrichtung einmal im mathematischen Uhrzeigersinn um die eigene Achse gedreht hat. Zweitens sollte die Differenz $\varphi_i - \varphi_{i-\tau}$-so berechnet werden, dass eine Differenz von $2\pi$ oder $-2\pi$ zwischen den unnormalisierten Winkeln ein Ergebnis von 0 lieferbar, also

$$\varphi_i - \varphi_{i-\tau} := \begin{cases} \varphi_i - \varphi_{i-\tau} - 2\pi & \varphi_i - \varphi_{i-\tau} > 0 \\ \varphi_i - \varphi_{i-\tau} + 2\pi & sonst \end{cases}.$$

Aufgrund der oben genannten Schranken und unter Verwendung dieser Winkeldifferenzformel lassen sich für jeden Zeitpunkt n alle möglichen Perioden $\tau$ bestimmen. Wenn es dabei nun nur noch ein lokales Minimum von $\gamma(\tau)$ gibt, das eine mögliche Periode ist, so ist diese noch nicht eindeutig (wie anhand der Fig. 4 verdeutlicht: Die Folge 41/42/43 ist im Hinblick auf die Folge 51/52/53 nicht eindeutig, so dass eine mögliche Fehlbestimmung erfolgen kann). Wenn jedoch eine Periode $\tau$ nach dem Abfahren von einer Entfernung von $2\tau$ noch feststellbar ist und keine weitere Periode mehr feststellbar ist, so ist das Problem eindeutig gelöst. Um also sicher das Erreichen des Ausgangspunkts festzustellen, ist es notwendig, die Kontur zweimal abzufahren.

Entsprechend enthält die in Fig. 1 schematisch gezeigte Speichereinheit 16 die so erzeugte Folge von Pfadabschnittsdaten, welche in der vorbeschriebenen Weise durch die zentrale Steuereinheit auf Autokorrelation ausgewertet wird.

Dabei weist die vorliegende Erfindung in der gezeigten Realisierungsform Vorteile im Hinblick auf Speicherverwaltung und -bedarf auf, was sich auch vorteilhaft auf den Zeitaufwand auswirkt, welche für die rechnerische Auswertung benötigt wird: Im ersten Ansatz ist mit einer Entfernungsauflösung von d ein Speicherfeld für die unnormalisierte Ausrichtung vorzusehen. Mit derselben Auflösung sind Speicherfelder für die Funktion $\gamma(\tau)$ vorzusehen. Nach jeder Strecke d ist also ein neuer Ausrichtungsrichtungswert zu speichern. Außerdem muss die Funktion $\gamma(\tau)$ für jedes $\tau$ aktualisiert werden. Dabei muss nicht die gesamte Summe neu evaluiert werden, das neue $\gamma(\tau)$ ergibt sich in offensichtlicher Weise aus dem alten Wert sowie der neuen Orientierung. Der Speicheraufwand wächst somit linear mit der gefahrenen Strecke, ebenso wie der Zeitaufwand. Der Zeitaufwand lässt sich jedoch verringern, indem nur diejenigen möglichen Perioden $\tau$ betrachtet werden, die den oben beschriebenen Standardabweichungstest bestehen. Sobald dieser Test einmal fehl schlägt, wird diese mögliche Periode nicht mehr betrachtet. Dazu wird neben zu jedem Speicherfeld für die Funktion $\gamma(\tau)$ ein Zeigerfeld vorgesehen, das auf das nächste Speicherfeld zeigt. Es entsteht somit eine verkettete Liste, die alle möglichen Kandidaten enthält. Besteht eine mögliche Periode den Standardabweichungstest nicht, so wird das entsprechende Speicherfeld aus der verketteten Liste entfernt. Der Zeitaufwand zum Aktualisieren ist damit proportional zur Anzahl der noch möglichen Kandidaten.

Sollte es eine Speichergrenze für die Speicherung der Kontur geben, so kann durch folgende Verfahren ein konstanter Speicherverbrauch erzielt werden. Überschreitet die Anzahl der Speicherzellen der Kontur eine gegebene Maximalanzahl, so werden jeweils zwei Felder durch eines zusammengefasst (durch Mitteilung der Ausrichtungen), dasselbe wird für die gespeicherten Funktionswerte $\gamma(\tau)$ durchgeführt. Für den weiteren Verlauf wird der Wert von d verdoppelt. Es steht damit wieder die Hälfte der Maximalanzahl zur Verfügung, um die Karte zu erweitern.

Sollte eine Periode sicher bestimmt sein, so kann ihr exakter Wert durch Minimumsbestimmung unter Verwendung der Werte der Nachbarspeicherzellen noch genauer als die Schrittweite d ermittelt werden.

Ist auf die vorgeschriebene Weise der Pfad bzw. die Periode sicher bestimmt, ist es weiterbildungsgemäß vorgesehen, eine Umrisskarte zu erzeugen. Der zentralen Steuereinheit 12 ist zu diesem Zweck eine Kartierungseinheit 22 symbolisch zugeordnet, wobei hierdurch verdeutlicht wird, dass mit in ansonsten bekannten Vorgehensweisen, z.B. aus der Robotikliteratur zu bekannten Techniken wie etwa, SLAM (dort insbesondere Loop-Closing) eine Karte erzeugt werden kann. Derartige Technologien sind beispielsweise in F. Lu and E. Milios, "Globally consistent range scan alignment for environment mapping" in: Autonomous Robots, Vol. 4, 1997, beschrieben, wobei diese Offenbarung insoweit und zum Zweck der Ausführbarkeit der Erfindung als in die vorliegende Offenbarung und zur Erfindung gehörig einbezogen gelten soll.

Die Umrisskarte ermöglicht nun die Umsetzung einer wichtigen Grundfunktionalität eines autonomen Roboters wie des im Ausführungsbeispiel beschriebenen ARM, nämlich die Ortung in Bezug auf die Karte. Dies betrifft sowohl die zeitliche Fortschreibung der Fahrzeugposition bei bekannter Position, als auch die Ermittlung der Position in Bezug auf die Karte bei unbekannter Position.

Im ersten Fall wird ein sogenannter Partikelfilter eingesetzt, wie z.B. in S. Thrun, W. Burgard, D. Fox., Probabilistic Robotics, MIT Press 2005, beschrieben.

Im zweiten Fall fährt der ARM zunächst an den Einfassungsdraht 32, wobei dies z.B. durch Zufallsnavigation erfolgen kann, die solange aktiv ist, bis der Einfassungsdraht 32 erreicht ist. Dann beginnt der Roboter den Einfassungsdraht 32 abzufahren und vergleicht dabei den abgefahren Pfad mit der Umrisskante, wie oben beschrieben, unter Zuhilfenahme der beschriebenen Autokorrelationsfunktion (bzw. zugehöriger Autokorrelationsdaten), bis die Position auf dem Einfassungsdraht eindeutig bestimmt ist.

Im Rahmen des fachmännischen Könnens liegt es dabei, neben einem direkten Vergleich der aufgezeichneten Folge mit dem Umriss auch etwa ein Partikelfilter oder ein Histogrammfilter vorzusehen, wie oben in S. Thrun e.a., Probabilistic Robotics, beschrieben.

Die vorliegende Erfindung ist nicht auf das gezeigte Ausführungsbeispiel sowie Anwendungsfall "Rasenmäher" beschränkt; vielmehr sind zahlreiche Varianten und alternative Ausführungen denkbar. In diesem Zusammenhang ist auch die Bestimmung des Arbeitsbereichs 34 durch einen Einfassungsdraht lediglich ein Beispiel; alternativ kann die Einheit geeignete Sensorik (z.B. einen Rasensensor, etwa in ansonsten bekannter Weise realisiert durch Kameramittel) aufweisen, mit welchen es auf einfachem Weg möglich ist, die Begrenzung der Arbeitsfläche abzufahren.

**Patentansprüche**

1. Selbststeuerndes Fahrzeug, das zum autonomen Fortbewegen auf einer Fläche ausgebildet ist und Antriebsmittel (10) zur Fortbewegung sowie Navigationsmittel (12) aufweist,
   wobei die Navigationsmittel zur Positionsbestimmung entlang eines geschlossenen, einen Arbeitsbereich (34) der Fläche umschließenden Pfades (32) ausgebildet sind, wobei
   die Navigationsmittel zum Erzeugen von aufeinanderfolgenden Pfadabschnittsdaten ausgebildet sind und
   die Pfadabschnittsdaten für Streckenabschnitte des Pfades jeweils eine zugeordnete Winkelinformation ($\varphi$), aufweisen,
   wobei den Navigationsmitteln Autokorrelationsmittel (12) zugeordnet sind, die so eingerichtet sind, dass sie aus einer einer Fortbewegung entlang des Pfades entsprechenden Folge von Pfadabschnittsdaten durch Ermittlung von Autokorrelationsdaten feststellen, ob und/oder, dass das Fahrzeug den umschließenden Pfad vollständig abgefahren hat
   und/oder eine bereits abgefahrene Folge von Streckenabschnitten erneut abgefahren wird,
   **dadurch gekennzeichnet, dass**
   die Autokorrelationsdaten $\gamma(\tau)$ bestimmt sind durch

$$\gamma(\tau) = \frac{1}{n-\tau} \sum_{i=\tau}^{n} (\varphi_i - \varphi_{i-\tau})^2 \ ,$$

   wobei $\varphi_i$ der Winkelinformation eines jeweiligen der Streckenabschnitte und n der Anzahl der Pfadabschnittsdaten entspricht.

2. Fahrzeug nach Anspruch 1,
   **dadurch gekennzeichnet,**
   **dass** das Fahrzeug als Träger für eine Arbeits- und/oder Funktionseinheit (20) ausgebildet ist

3. Fahrzeug nach Anspruch 2,
   **dadurch gekennzeichnet,**
   **dass** die Arbeits- und/oder Funktionseinheit (20) eine Mähvorrichtung, insbesondere Rasenmäher, eine Saugvorrichtung, eine Kehrvorrichtung, eine Düngevorrichtung und/oder eine Bewässerungsvorrichtung ist.

4. Fahrzeug nach einem der Ansprüche 1 bis 3,
   **dadurch gekennzeichnet,**
   **dass** den Navigationsmitteln eine Kartierungseinheit (22) zugeordnet ist, die so ausgebildet ist, dass sie aus den Streckenabschnittsdaten und/oder den Autokorrelationsdaten Umrisskartendaten der vom Pfad umschlossenen Fläche (34) erzeugt.

**5.** Fahrzeug nach einem der Ansprüche 1 bis 4,
**dadurch gekennzeichnet,**
**dass** die Streckenabschnitte jeweils eine konstante Länge (d) entlang des Pfades aufweisen.

**6.** Fahrzeug nach einem der Ansprüche 1 bis 5,
**dadurch gekennzeichnet,**
**dass** eine Länge der Streckenabschnitte durch Odometrie ermittelt wird, wobei den Antriebsmitteln und den Navigationsmitteln eine Odometrieeinrichtung (10) zugeordnet ist.

**7.** Fahrzeug nach einem der Ansprüche 1 bis 6,
**dadurch gekennzeichnet,**
**dass** die Navigationsmittel eine elektronische Speichereinheit (16) für die Folge von Pfadabschnittsdaten aufweisen.

**8.** Fahrzeug nach Anspruch 7,
**dadurch gekennzeichnet,**
**dass** der elektronischen Speichereinheit (16) Mittel zur Datenkompression der Pfadabschnittsdaten zugeordnet sind, die bevorzugt zum Erzeugen einer Verknüpfung, weiter bevorzugt Mittelung, von Orientierungsinformationen aufeinanderfolgender Pfadabschnittsdaten zur Datenkompression ausgebildet sind.

**9.** Fahrzeug nach einem der Ansprüche 1 bis 8,
**dadurch gekennzeichnet,**
**dass** die Navigationsmittel zum Zusammenwirken mit einem den umschließenden Pfad definierenden Einfassungsdraht (32) ausgebildet sind, der ein durch die Navigationsmittel detektierbares Signal anbietet.

**10.** Fahrzeug nach einem der Ansprüche 1 bis 9,
**dadurch gekennzeichnet,**
**dass** die Navigationsmittel zum Zusammenwirken mit einer Sensoreinheit ausgebildet ist, die, insbesondere mit optischen Mitteln, eine Erkennung des Arbeitsbereichs (34) in der Fläche sowie deren Begrenzung ermöglicht.

**11.** Fahrzeug nach einem der Ansprüche 1 bis 10,
**dadurch gekennzeichnet,**
**dass** die Folge von Pfadabschnittsdaten dem zweimal abgefahrenen umschließenden Pfad entspricht.

**Claims**

**1.** Self-steering vehicle which is designed to perform autonomous locomotion on a surface and has drive means (10) for locomotion as well as navigation means (12),
wherein the navigation means are designed to determine positions along a closed path (32) enclosing a working area (34) of the surface, wherein
the navigation means are designed to generate successive path section data items, and
the path section data items for route sections of the path each have an assigned angle information item ($\varphi$),
wherein the navigation means are assigned auto-correlation means (12) which are configured in such a way that by acquiring auto-correlation data items they determine, from a sequence of path section data items corresponding to locomotion along the path, whether and/or that the vehicle has completely traveled along the enclosing path and/or a sequence of route sections which has already been traveled along is being traveled along again, **characterized in that** the auto-correlation data $\gamma\,(\tau)$ is determined by

$$\gamma(\tau) = \frac{1}{n-\tau} \sum_{i=\tau}^{n} (\varphi_i - \varphi_{i-\tau})^2 \quad ,$$

wherein $\Phi Li$ corresponds to the angle information of a respective route section of the route sections and n to the number of path section data items.

**2.** Vehicle according to Claim 1,
**characterized**

**in that** the vehicle is designed as a carrier for a working and/or function unit (20).

3. Vehicle according to Claim 2,
   **characterized**
   **in that** the working and/or function unit (20) is a mowing device, in particular lawnmower, a suction device, a sweeping device, a fertilizer application device and/or a watering device.

4. Vehicle according to one of Claims 1 to 3,
   **characterized**
   **in that** the navigation means are assigned a mapping unit (22) which is designed in such a way that it generates outline map data items of the surface (34) which is enclosed by the path, on the basis of the route section data items and/or the auto-correlation data items.

5. Vehicle according to one of Claims 1 to 4,
   **characterized**
   **in that** the route sections each have a constant length (d) along the path.

6. Vehicle according to one of Claims 1 to 5,
   **characterized**
   **in that** a length of the route sections is determined by odometry, wherein an odometry device (10) is assigned to the drive means and to the navigation means.

7. Vehicle according to one of Claims 1 to 6,
   **characterized**
   **in that** the navigation means have an electronic memory unit (16) for the sequence of path section data items.

8. Vehicle according to Claim 7,
   **characterized**
   **in that** means for performing data compression of the path section data items are assigned to the electronic memory unit (16), which means are preferably designed to generate a logic operation, more preferably averaging, of orientation information of successive path section data items for the purpose of data compression.

9. Vehicle according to one of Claims 1 to 8,
   **characterized**
   **in that** the navigation means are designed to interact with a border wire (32) which defines the enclosing path and which provides a signal which can be detected by the navigation means.

10. Vehicle according to one of Claims 1 to 9,
    **characterized**
    **in that** the navigation means are designed to interact with a sensor unit which permits, in particular with optical means, detection of the working area (34) in the surface and the boundaries thereof.

11. Vehicle according to one of Claims 1 to 10,
    **characterized**
    **in that** the sequence of path section data items corresponds to the surrounding path which has been travelled along twice.

**Revendications**

1. Véhicule à pilotage automatique servant au déplacement autonome sur une surface et comportant des moyens d'entraînement (10) pour le déplacement ainsi que des moyens de navigation (12) ;
   les moyens de navigation servant à déterminer la position le long d'un parcours (32) fermé incluant une zone de travail (34) de la surface ;
   les moyens de navigation servant à produire les données de section de parcours successives ; et
   les données de section de parcours des sections de tronçon du parcours comportant respectivement une information d'angle (φ) associée ;
   des moyens d'autocorrélation (12) étant associés aux moyens de navigation, lesdits moyens d'autocorrélation étant conçus de façon à déterminer, à partir d'une suite de données de section de parcours correspondant à un déplacement le long du parcours, par calcul de données d'autocorrélation, si et/ou que le véhicule a entièrement parcouru le parcours délimité et/ou a de nouveau parcouru une suite déjà parcourue de sections de tronçon ; **caractérisé en ce que** les données d'autocorrélation $\gamma(\tau)$ sont déterminées par :

$$\gamma(\tau) = \frac{1}{n - \tau} \sum_{i=\tau}^{n} ( \varphi_i - \varphi_{i-\tau})^2$$

où $\varphi_i$ correspond à l'information d'angle d'une section respective parmi les sections de tronçon et n correspond au nombre de données de section de parcours.

2. Véhicule selon la revendication 1, **caractérisé en ce que** le véhicule prend la forme d'un support pour une unité active et/ou fonctionnelle (20).

3. Véhicule selon la revendication 2, **caractérisé en ce que** l'unité active et/ou fonctionnelle (20) est un dispositif de fauchage, notamment une tondeuse, un dispositif d'aspiration, un dispositif de balayage, un dispositif d'amendement et/ou un dispositif d'arrosage.

4. Véhicule selon l'une quelconque des revendications 1 à 3, **caractérisé en ce qu'**une unité de cartographie (22) est associée aux moyens de navigation, ladite unité de cartographique étant réalisée de telle sorte qu'elle produit à partir des données de section de tronçon et/ou des données d'autocorrélation des données cartographiques de contour de la surface (34) entourée par le parcours.

5. Véhicule selon l'une quelconque des revendications 1 à 4, **caractérisé en ce que** les sections de tronçon présentent respectivement une longueur (d) constante le long du parcours.

6. Véhicule selon l'une quelconque des revendications 1 à 5, **caractérisé en ce qu'**une longueur des sections de tronçon est calculée par odométrie, un dispositif d'odométrie (10) étant associé aux moyens d'entraînement et aux moyens de navigation.

7. Véhicule selon l'une quelconque des revendications 1 à 6, **caractérisé en ce que** les moyens de navigation comportent une unité de mémoire (16) électronique pour la suite de données de section de parcours.

8. Véhicule selon la revendication 7, **caractérisé en ce que** des moyens de compression de données des données de section de parcours sont associés à l'unité de mémoire (16) électronique, lesdits moyens étant réalisés de façon préférée pour produire une opération logique, en sus de façon préférée une moyenne, des informations d'orientation des données de section de parcours successives, pour la compression de données.

9. Véhicule selon l'une quelconque des revendications 1 à 8, **caractérisé en ce que** les moyens de navigation sont conçus pour interagir avec un fil de fer de clôture (32) définissant le parcours délimité, ledit fil de fer de clôture envoyant un signal détectable par les moyens de navigation.

10. Véhicule selon l'une quelconque des revendications 1 à 9, **caractérisé en ce que** les moyens de navigation sont réalisés pour interagir avec une unité de détection permettant notamment une détection de la zone de travail (34) dans la surface ainsi que sa délimitation par le biais de moyens optiques.

11. Véhicule selon l'une quelconque des revendications 1 à 10, **caractérisé en ce que** la suite de données de section de parcours correspond au parcours délimité deux fois parcouru.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03039314 A
- US 2005046373 A1

**In der Beschreibung aufgeführte Nicht-Patentliteratur**

- **F. LU ; E. MILIOS.** Globally consistent range scan alignment for environment mapping. *Autonomous Robots,* 1997, vol. 4